# EUROPEAN PATENT APPLICATION

(11) **EP 1 666 742 A1**
(43) Date of publication of application: **07.06.2006**
(21) Application number: 03818553.4
(22) Date of filing: 01.09.2003
(51) Int. Cl.: F16B 39/02

(54) **LOCK BOLT DEVICE**

(71) Applicant: Hard Lock Industry Co. Ltd., Higashiosaka-shi, Osaka 577-0063 (JP)
(72) Inventor: WAKABAYASHI, Katsuhiko, Osaka-shi, Osaka 559-0007 (JP)
(74) Representative: Paul, Dieter-Alfred
(86) International application number: PCT/JP2003/011168
(87) International publication number: WO 2005/024252

(57) **Abstract**

An anti-loosening bolt assembly by this invention has: a setscrew, which has a screw thread on its outer periphery; and a lock bolt, which has a screw thread having the same pitch as the screw thread of the setscrew, and an axial end of which is engaged with an axial base of the setscrew; wherein either said axial base of the setscrew or said axial end of the lock bolt has a conical protrusion part; the other has a first concave part, with which said protrusion part is engaged; and an outer peripheral surface of said protrusion part and an inner peripheral surface of the first concave part are slightly eccentric.

## Description

### FIELD OF THE INVENTION

The present invention relates to an anti-loosening bolt assembly, which is suitable for the use as a shaft fixator, which has a function preventing loosening so as to fix a rotating part such as a flywheel, a discotic component, and others to a shaft.

### DESCRIPTION OF RELATED ART

In the prior art, to fix a flywheel to a shaft, a through-bore for a shaft is pierced through the flywheel, the through-bore has a fixing screw bore, which penetrates from the inner surface of the through-bore to the outer surface of the flywheel, and a setscrew, which has a external screw on its outer periphery, is screwed in the fixing screw bore and pressed to the shaft.

However, there is a problem that vibration etc. caused by the rotary motion of the flywheel causes the fixing screw to go loose, thus it is necessary to provide some kind of means to prevent the fixing screw from loosening. There are ways as this kind of means to prevent the bolt from loosening, such as a fixing screw having a stria, in which elastic body such as a spring and nylon is embedded, and a fixing screw applied adhesion bond, etc.

However, in the first way using the elastic body, there is a defect, in which to screw the screw is bothering because torque caused by the elastic body is added from the beginning of the screwing the fixing screw into the screw bore, and also there is a defect, in which the effect of preventing loosening wears off because physicality of the elastic body goes weak caused by aging during the use. On the other hand, in the latter way using adhesion bond, there is a problem, in which the usage is limited to the place where there is no necessity to unloose the fixing screw back again, since the fixing screw is to be gummed up to the screw bore.

### SUMMARY OF THE INVENTION

The main object of the present invention is to provide an anti-loosening bolt assembly, which is reflyable, easy to screw into the screw bore, and able to lock without fail by the force of the stress to the cutting direction automatically added at the time of the final fastening.

More specifically, an anti-loosening bolt assembly by this invention comprises: a setscrew, which has an external screw on its outer periphery; a lock bolt, which has an external screw having the same pitch as the external screw of the setscrew, and an axial end of which is engaged with an axial base of the setscrew; wherein either said axial base of the setscrew or said axial end of the lock bolt has a conical protrusion part; the other has a first concave part, with which said protrusion part is engaged; and an outer peripheral surface of said protrusion part and an inner peripheral surface of the first concave part are slightly eccentric.

Either said protrusion part or said first concave part may be eccentric to the external screws; and the other be concentric in an anti-loosening bolt assembly as set forth in above mentioned invention. Also, both of them may be eccentric to the external screw, and in this case, the protrusion part and the first concave part need to be only relatively eccentric.

Additionally, it is preferable that the setscrew has a engaging part, with which a rotary tool engages. This engaging part may be a second concave part opened on either an axial end surface or the base surface, more preferably, may be either a hexagon socket or a square socket, in which hexagonal wrench etc. can fit by insertion.

Said first concave part may be located on the axial base of the setscrew, and in this case, said second concave part may be located on axial recess of the first concave part.

Additionally, the lock bolt may have a third concave part, with which a rotary tool engages, opened on the base surface. This third concave part may be either a hexagon socket or a square socket, in which hexagonal wrench etc. can fit by insertion. Also, the maximum diameter of the setscrew may be a diameter of the external screw. Also the maximum diameter of the lock bolt may be a diameter of the external screw. If the external screw has the maximum diameter, as just described, the whole body of the setscrew and/or the lock bolt can be embedded into the screw bore.

Preferably, the ratio of the maximum diameter of said protrusion part to the maximum diameter of the external screw is between 0.5 and 0.6. If this ratio is smaller than 0.5, occurring position of the ratchet effect caused by the eccentricity between the protrusion part and the concave part will get too close to the shaft centre and be combined with the tolerance between the external screw and the protrusion part, so that enough effect of preventing loosening will not be acquired. On the other hand, if this ratio goes beyond 0.6, it will be impossible to acquire the enough radial thickness around the first concave part.

Additionally, the present invention is an anti-loosening bolt assembly, which comprises a setscrew, which is screwed into a screw bore, a lock member, which is inserted into the screw bore nearer to the recess than the setscrew, wherein a concave part is formed in either a top surface of said lock member or a lower end surface of the setscrew; a protrusion part fitted into the concave part is formed on the another surface; and a peripheral surface of said protrusion part and inside surface of a first concave part is slightly eccentric.

### BRIEF DESCRIPTION OF THE DRAWINGS

Fig. 1 is an analysis elevation view of a part of cross section of the anti-loosening bolt assembly, according to the first embodiment of the present invention;
Fig. 2 is an elevation view of the part of cross section of the unit on completion of fastening;
Fig. 3 is an enlarged cross sectional view of the principal part of the Fig. 2;
Fig. 4(a) is a horizontal view which is enlarged view of the fixing member used in the embodiment of the present invention;
Fig. 4(b) is an elevation view which is enlarged view of the fixing member used in the embodiment of the present invention; and
Fig. 5 is a cross sectional view showing an example of other embodiment of the present invention.

### THE PREFERRED EMBODIMENTS

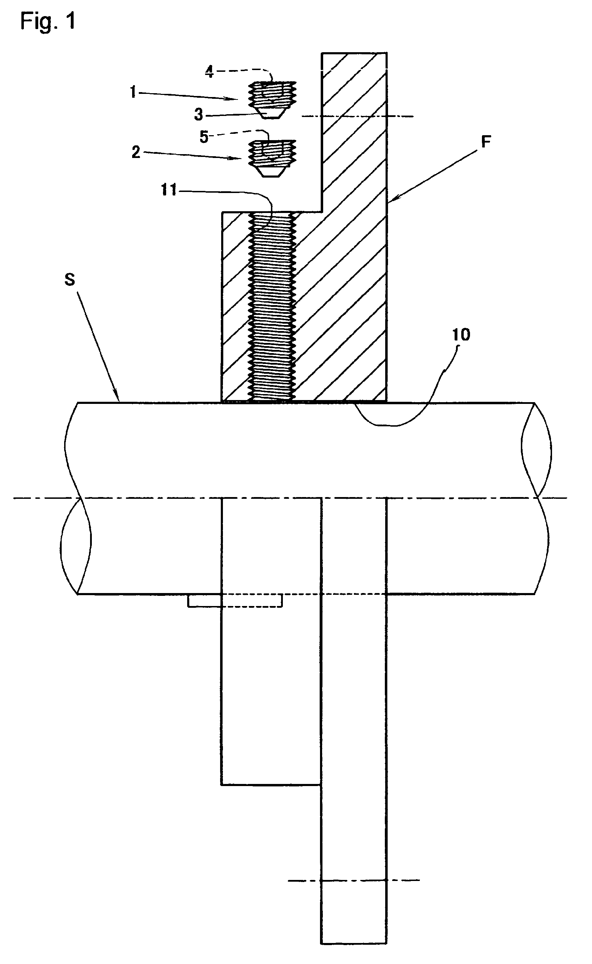

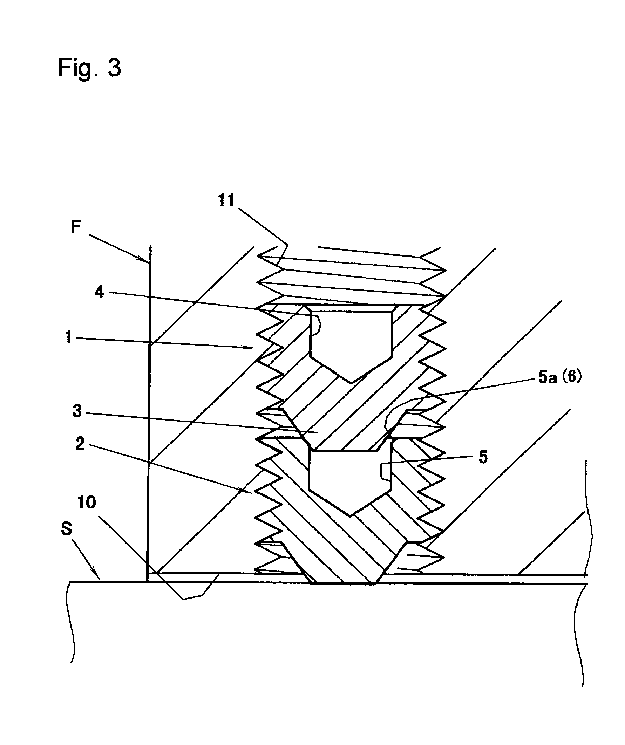

Figs. 1 to 4 illustrates the shaft-fixing device as an anti-loosening bolt assembly according to the first embodiment of the present invention. The shaft-fixing device has a lock bolt 1 and a setscrew 2, which have a external screw on their outer periphery. In the embodiment shown in the figures, the same configuration is used commonly in the lock bolt 1 and the setscrew 2, however, it is possible to use the different configuration, for example, the setscrew 2 does not need to have a protrusion part 3.

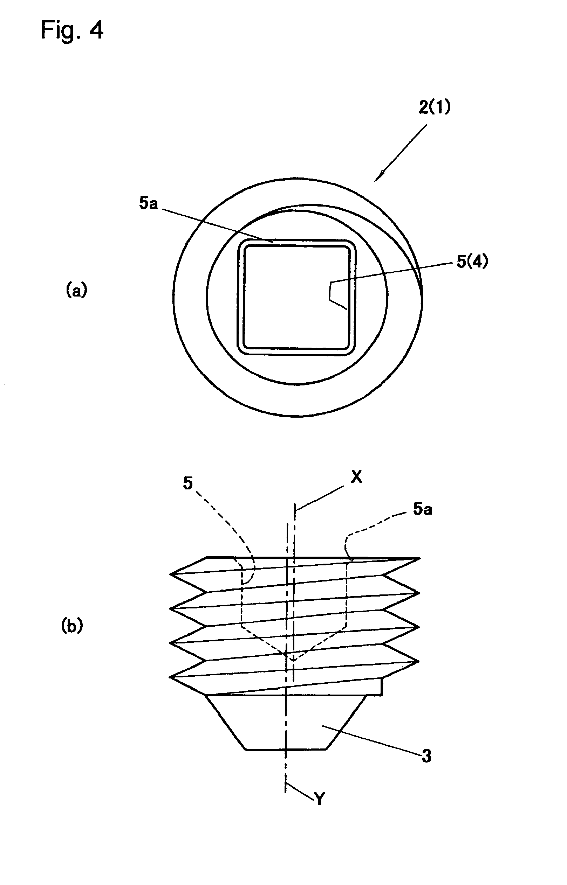

On the axial end of the lock bolt 1, there is a protrusion part 3, which has a conical and trapezoidal shape being eccentric to the shaft center X of the external screw. The shaft center Y of the protrusion part 3 is shown in Fig. 4. Additionally, on the axial base surface of the lock bolt 1, an engaging concave part 4 (the third concave part) is opened to engage with the wrench etc. as a rotary tool.

Also on the axial base surface of the lock bolt 2, an engaging concave part 5 (the second concave part) is opened to engage with the wrench etc. as a rotary tool. This concave part 5 is, as shown in Fig. 4, formed almost square in a horizontal view. The upper edge of this concave part 5 is formed as a taper surface 5a, which descends radially-outwardly as it goes upward, and this taper surface 5a is formed as the first concave part 6, which engages the protrusion part 3 of the lock bolt 1. By this composition, the engaging concave part 5 is to be located in the recess of the concave part 6.

This first concave part 6 is concentric with the external screw of the setscrew 2. That is, the center of the inscribed circle of the taper surface 5a and the center of the external screw are formed to agree with each other, hereby the protrusion part 3 of the lock bolt 1 and the concave part 6 of the setscrew 2 facing the protrusion part 3 are formed both slightly and relatively eccentric.

Additionally, the diameter of the end of the protrusion part 3 (minimum diameter) is formed to be smaller than the diameter of the inscribed circle of the concave part 6, and at the same time, the diameter of the base end of the protrusion part 3 (maximum diameter) is formed to be larger than the diameter of the inscribed circle of the concave part 6, so as to achieve ratchet effect caused by the engagement between the protrusion part 3 and the concave part 6.

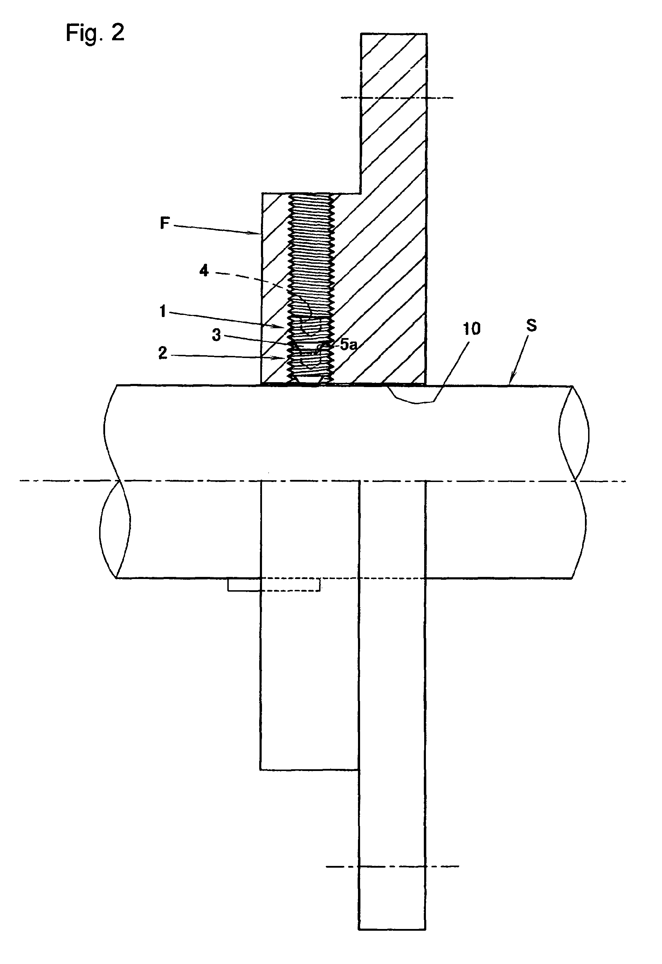

The shaft-fixing device of this embodiment is used to fix a discotic component F, such as a flywheel and others to a shaft S as shown in Fig.1 and Fig.2. The discotic component F has a through-bore 10 for the shaft S, and the shaft S is inserted in the bore 10. The component F has a fixing screw bore 11, which penetrates from the inner face of the through-bore 10 to the peripheral surface of the component F. The setscrew 2 and the lock bolt 1 of this embodiment are screwed, being embedded into this screw bore 11. In addition, it is possible to provide a key 12 for the shaft to prevent the device F from revolving around the shaft S, and to provide a key groove (not shown in Figs.), which engages with the key 12, for the device F.

For the fixation of the device F to the shaft S, firstly, the device F is put to the shaft S, after that, the setscrew 2 is screwed into the screw bore 11. After the lower edge of the setscrew 2 touches to the periphery surface of the shaft S, the setscrew 2 is revolved by the certain torque to fix the device F to the shaft S with the setscrew 2.

Secondly, the lock bolt 1 is screwed into the screw bore 11. At the final step of the screwing, the concave part 6 of the setscrew 2 and the bevel side-surface of the protrusion part 3 of the lock bolt 1 is touched each other, and that causes a horizontal stress to the setscrew 2 and the lock bolt 1. This horizontal stress increases pro rata to the amount of the screwing; thus, after the final screwing, the horizontal stress and the upward stress are added in the bolts so that the extremely great lock effect is brought out.

In addition, in the abovementioned embodiment, the concave part can be placed on the lock bolt and the protrusion part can be placed on the setscrew, of course. Also, the protrusion part 3 is placed to be eccentric in the abovementioned embodiment, however the concave part 6 may be placed to be eccentric to the external screw.

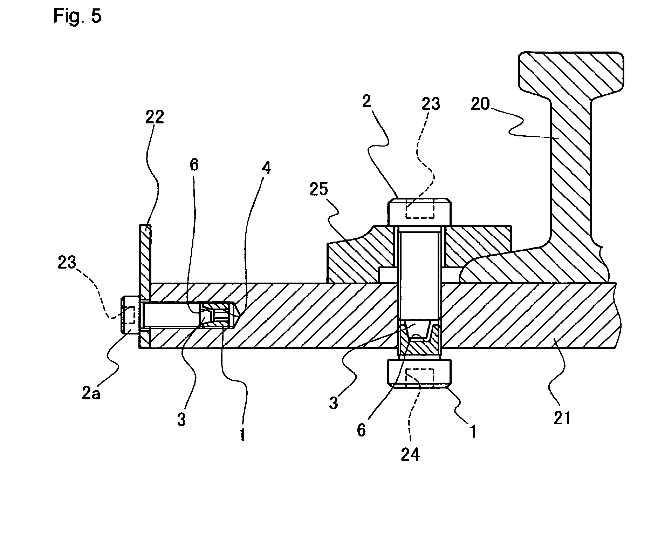

As an example of the use of other two embodiments of this invention, the mounting construction of a detector to a track rail is shown in Fig. 5. A board 21 is fasten to the bottom of a track rail 20 with a joint jig 25, and an anti-loosening bolt assembly of the second embodiment of the present invention is used in this joint. A detector-mounting bracket 22 is fixed to the end of the board 21 with an anti-loosening bolt assembly of the third embodiment of the present invention. Among the constructions of these retaining bolt units preventing loosening of the embodiment 2 and 3, the same construction as the one in the abovememtioned first embodiment is numbered identically to omit the detailed explanation, and the different constructions and effects are to be explained.

Both the setscrew 2 and the lock bolt 1 of the anti-loosening bolt assembly of the second embodiment have a bolt head 1a and 2a. This bolt head 1a and 2a have a round shaped peripheral surface and they have a hexagon socket 23, 24 on the top surface. The protrusion part 3 is located at the end of the setscrew 2, and the first concave part 6 is located on the end surface of the lock bolt 1. For fastening of this anti-loosening bolt assembly, firstly, the setscrew 2 is fastened by the certain torque, after that, the lock bolt 1 is fastened from the backside surface, so that the protrusion part 3 of the setscrew 2 and the first concave part 6 of the lock bolt 1 are bolted up eccentrically, and the strong effect of preventing loosening resulting from the ratchet effect is exercised.

Additionally, the setscrew 2 of the anti-loosening bolt assembly of the third embodiment has a bolt head 2a. The protrusion part 3 is located at the end of the setscrew 2, and the first concave part 6 is located on the base surface of the lock bolt 1. The lock bolt 1 has a hexagon-shaped third concave part 4 in the axial inner recess of the first concave part 6. For fastening of this anti-loosening bolt assembly, firstly, the lock bolt 1 is screwed using the tools such as hexagonal wrench up to the certain depth of the screw bore, the setscrew 2 is revolved in the screw bolt, the protrusion part 3 of the setscrew 2 and the first concave part 6 of the lock bolt 1 are bolted up eccentrically, and the strong effect of preventing loosening resulting from the ratchet effect is exercised.

However typical embodiments in this invention were explained above, this invention is not limited to be these embodiment constructions and can be alternated ad libitum. For example, the setscrew and the lock bolt can be provided with a through-bore on the centre of their axis, and the first, the second, and the third concave parts are located at an axial part of this through-bore. It is possible to get the same effect of preventing loosening, by placing the lock unit without screw on its peripheral surface alternatively. This lock unit has a columned or cylindrical shape and it is preferable that the external diameter of the unit is almost the same as or slightly smaller than the internal diameter of the screw bore. Compositions of other parts are the same as those of the lock bolt, and the protrusion part 3 and the first and the second concave part may be placed.

According to the present invention, it is possible to make the initial screwing into the screw bore easily, and at the same time, the horizontal stress and the upward stress are added resulting in an exercitation of a mighty lock effect at the time of the final fastening, loosening of the setscrew and the lock bolt is prevented without fail, no maintenance is needed even used as a joint of the axis of the parts used for a long period such as a flywheel, and the comprehensive cost reduction is achieved. Moreover, there is no damage to a external screw of the setscrew, so that there is a significant effect of that it is used over and over again.

## Claims

1. An anti-loosening bolt assembly comprising:
a setscrew having an external screw on its outer periphery;
a lock bolt having an external screw with the same pitch as the screw of the setscrew, and an axial end of which is engaged with an axial base of the setscrew;
wherein either said axial base of the setscrew or said axial end of the lock bolt has a conical protrusion part;
the other has a first concave part, with which said protrusion part is engaged; and
an outer peripheral surface of said protrusion part and an inner peripheral surface of a first concave part are slightly eccentric.

2. An anti-loosening bolt assembly as set forth in claim 1, wherein either said protrusion part or said first concave part is eccentric to the external screws; and the other is concentric thereto.

3. An anti-loosening bolt assembly as set forth in claim 1, wherein the setscrew has a engaging part with which a rotary tool engages.

4. An anti-loosening bolt assembly as set forth in claim 3, wherein said engaging part is a second concave part opened on either an axial end surface or the base surface.

5. An anti-loosening bolt assembly as set forth in claim 4, wherein the first concave part is located at the axial base of the setscrew, and said second concave part is located at axial inner recess of the first concave part.

6. An anti-loosening bolt assembly as set forth in claim 1, wherein the lock bolt has a third concave part, with which a rotary tool engages, opened on the base surface.

7. An anti-loosening bolt assembly as set forth in claim 1, wherein a diameter of the external screw is a maximum diameter of the setscrew.

8. An anti-loosening bolt assembly as set forth in claim 1, wherein a diameter of the external screw is a maximum diameter of the lock bolt.

9. An anti-loosening bolt assembly as set forth in claim 1, wherein a ratio of the maximum diameter of the protrusion part to the maximum diameter of the external screw is between 0.5 to 0.6.

10. An anti-loosening bolt assembly comprising:
a setscrew screwed into a screw bore;
a lock member inserted into the screw bore nearer to the recess than the setscrew;
wherein a concave part is formed in either a top surface of said lock member or a lower end surface of the setscrew;
a protrusion part fitted into the concave part is formed on the another surface; and
a peripheral surface of said protrusion part and inside surface of a first concave part is slightly eccentric.
